# EUROPÄISCHE PATENTSCHRIFT

(11) **EP 1 037 429 B1**
(45) Veröffentlichungstag und Bekanntmachung des Hinweises auf die Patenterteilung: **12.10.2005**
(21) Anmeldenummer: 00105600.1
(22) Anmeldetag: 16.03.2000
(51) Int. Cl.: H04L 12/28, H04Q 3/62, H04M 11/06, H04M 7/00, H04M 3/56

(54) **Anordnung zur Datenübermittlung über ein Kommunikationsnetz**
Arrangement for data transmission via a communications network
Dispositif pour la transmission des données sur un réseau de communication

(30) Priorität: 16.03.1999 DE 19911714
(43) Veröffentlichungstag der Anmeldung: 20.09.2000
(73) Patentinhaber: SIEMENS AKTIENGESELLSCHAFT, 80333 München (DE)
(72) Erfinder: Neuhaus, Ralf, 44534 Lünen (DE)

(56) Entgegenhaltungen:
- WO-A-97/46073
- WO-A-98/57485
- WO-A-99/04596
- US-A- 5 790 548

## Beschreibung

Aufgrund einer zunehmenden zeitlichen und räumlichen Flexibilisierung der Arbeitsbedingungen nimmt die Anzahl derjenigen Mitarbeiter, die ihre beruflichen Aufgaben nicht an ihrem Arbeitsplatz im Unternehmen erledigen ständig zu. Aus "Das virtuelle Büro", telcomreport, Heft 4, 1997, Siemens AG Berlin und München, ist bekannt, daß für ein effektives Erledigen der Aufgaben außerhalb des Unternehmens ein Zugriff auf die in einem lokalen Netz des Unternehmens angebotenen unternehmens-internen Daten und Leistungsmerkmale im Sinne des sogenannten 'Teleworkings' unabhängig vom Aufenthaltsort des Mitarbeiters notwendig ist.

In der deutschen Patentanmeldung mit dem Aktenzeichen 198 083 68.8 wurde bereits ein Anordnung vorgeschlagen, durch die ein, über ein Kommunikationsnetz mit einer Kommunikationsanlage verbundenes Kommunikationsendgerät - im weiteren als externes Kommunikationsendgerät bezeichnet - im Rahmen einer sogenannten 'Teleworking-Anmeldung' einerseits auf unternehmens-interne Daten zugreifen kann und andererseits von der Kommunikationsanlage realisierte Leistungsmerkmale an dem externen Kommunikationsendgerät in gleicher Weise, wie an einem internen Kommunikationsendgerät zur Verfügung gestellt werden. Ein Anschluß des externen Kommunikationsendgerätes an die Kommunikationsanlage erfolgt dabei über ein ISDN-orientiertes Kommunikationsnetz, wobei zu übermittelnde Nutzdaten als auch sprachorientierte Daten über Nutzdatenkanäle (B-Kanäle) einer ISDN-Verbindung zwischen der Kommunikationsanlage und dem externen Kommunikationsendgerät übermittelt werden. Die ISDN-Verbindung ist dabei entweder eine für die Dauer der Teleworking-Anmeldung eingerichtete Wählverbindung oder alternativ eine über das ISDN-orientierte Kommunikationsnetz administrativ eingerichtete Festverbindung.

Hierbei werden im allgemeinen die zu übermittelnden sprachorientierten Daten über einen ersten Nutzdatenkanal (B-Kanal) und die zu übermittelnden Nutzdaten über einen zweiten Nutzdatenkanal (B-Kanal) der ISDN-Verbindung übermittelt. Durch die Übermittlung der Nutzdaten über einen Nutzdatenkanal der ISDN-Verbindung ist die maximale Datenübertragungsrate auf 64 kBit/s eingeschränkt, was bei modernen Anwendungen häufig nicht mehr ausreichend ist.

Eine Lösung dieses Problems ist aus der internationalen Offenlegungsschrift WO 97/46073 bekannt, die eine Anordnung zum Anschluss einer Teilnehmereinrichtung an ein öffentliches Netzwerk - beispielsweise das Internet oder das ISDN-Kommunikationsnetz - offenbart. Die aus einem Telefon und einem Personal Computer bestehende Teilnehmereinrichtung ist über ein so genanntes "network terminal" und einem Zugangsknoten mit den öffentlichen Netzwerken verbunden. Durch das "network terminal" werden die jeweiligen Anschlussleitungen für das Telefon und den Personal Computer auf eine gemeinsame Übertragungsleitung zum Zugangsknoten zusammengefasst. Zur Bereitstellung eine hohen Datenübertragungsrate zwischen dem "network terminal" und dem Zugangsknoten erfolgt eine Datenübertragung über die Übertragungsleitung gemäß dem xDSL-Protokoll. Bei der offenbarten Anordnung erfolgt eine Steuerung der zu übermittelnden Sprach- und IP-Daten (IP: Internet Protocol) durch zwei separate Einheiten (IP ACCESS SERVER und TELEPHONY SERVER).

Der vorliegenden Erfindung liegt daher die Aufgabe zugrunde, eine alternative Anordnung anzugeben, durch die im Rahmen einer Teleworking-Anmeldung eine Datenübermittlung zwischen einer Kommunikationsanlage und einem, an der Kommunikationsanlage angemeldeten Kommunikationsendgerät über ein Kommunikationsnetz ermöglicht wird.

Die Lösung dieser Aufgabe erfolgt erfindungsgemäß mit den Merkmalen des Patentanspruchs 1.

Zum besseren Verständnis der beim Teleworking ablaufenden Verfahrensschritte erscheint es erforderlich zunächst noch einmal auf bekannte Prinzipien näher einzugehen.

Wird an einem externen Kommunikationsendgerät durch einen Teilnehmer eine sogenannte Teleworking-Anmeldung eingeleitet, so wird über ein, die Kommunikationsanlage mit dem externen Kommunikationsendgerät verbindendes Kommunikationsnetz eine Datenverbindung zwischen der Kommunikationsanlage und dem externen Kommunikationsendgerät aufgebaut. Eine Anmeldung an der Kommunikationsanlage erfolgt dabei beispielsweise durch Eingabe einer bestimmten kommunikationsanlagen-internen Rufnummer am externen Kommunikationsendgerät durch den Teilnehmer.

Für eine Identifizierung des externen Kommunikationsendgerätes an der Telekommunikationsanlage wird die Rufnummer des externen Kommunikationsendgerätes im Kommunikationsnetz und für eine Authentifizierung des Teilnehmers wird eine zugehörige teilnehmerindividuelle Kennummer PIN (Private Identification Number) - und alternativ oder additiv ein teilnehmerindividuelles Paßwort - über die Datenverbindung an die Kommunikationsanlage übermittelt. Anhand einer in der Kommunikationsanlage gespeicherten Liste, welche die für das Teleworking berechtigten Rufnummern enthält, findet eine Überprüfung der Anmeldung des externen Kommunikationsendgerätes an der Kommunikationsanlage statt. Hat die Überprüfung die Anmeldung bestätigt, wird dem externen Kommunikationsendgerät von der Kommunikationsanlage eine kommunikationsanlagen-interne Rufnummer zugewiesen. Gleichzeitig werden alle an die kommunikationsanlagen-interne Rufnummer gerichteten Rufe an das externe Kommunikationsendgerät weitergeleitet.

Zusätzlich zu den übermittelten Nutzdaten werden von der Kommunikationsanlage an die kommunikationsanlagen-interne Rufnummer zu übermittelnde endgeräteorientierte Signalisierungsinformationen über einen Nutzdatenkanal der Datenverbindung an das externe Kommunikationsendgerät übermittelt. Die endgeräteorientierten Signalisierungsinformationen basieren beispielsweise auf einem kommunikationsanlagen-internen Signalisierungsprotokoll, wie es üblicherweise beim Signalisierungsaustausch zwischen internen Kommunikationsendgeräten und der Kommunikationsanlage zur Verfügung steht. Durch die Übermittlung von, auf dem internen Signalisierungsprotokoll basierenden endgeräteorientierten Signalisierungsinformationen an das externe Kommunikationsendgerät werden einem Teilnehmer am externen Kommunikationsendgerät alle von der Kommunikationsanlage realisierten Leistungsmerkmale in gleicher Weise, wie an einem internen Kommunikationsendgerät zur Verfügung gestellt. Eine Übermittlung von endgeräteorientierten Signalisierungsinformationen vom externen Kommunikationsendgerät - seine Anmeldung an der Kommunikationsanlage vorausgesetzt - zur Kommunikationsanlage erfolgt in gleicher Weise in umgekehrter Richtung.

Ein wesentlicher Vorteil der Erfindung besteht nun durch das Vorsehen nur einer Steuereinheit zur Steuerung einer, nach einem Anmelden eines externen Kommunikationsendgerätes bei der Kommunikationsanlage zu erfolgenden Datenübermittlung
- zwischen einem internen, an die Kommunikationsanlage angeschlossenen Kommunikationsendgerät und dem externen Kommunikationsendgerät, als auch
- zwischen einer über das lokale Rechnernetz an die Kommunikationsanlage angeschlossenen Datenverarbeitungseinrichtung und dem externen Kommunikationsendgerät
darin, dass der Implementierungsaufwand im Vergleich zum Stand der Technik reduziert werden kann.

Ein weiterer Vorteil der Erfindung besteht darin, daß eine Übermittlung von, infolge einer Anmeldung eines externen Kommunikationsendgerätes an einer Kommunikationsanlage, die zwischen dem externen Kommunikationsendgerät und der Kommunikationsanlage zu übermittelnden Daten über ein vorhandenes, an die Kommunikationsanlage angeschlossenes lokales Rechnernetz und ein, das lokale Rechnernetz mit dem externen Kommunikationsendgerät verbindendes breitbandiges Datenübertragungsnetz, für die Datenübertragung auf einfache Weise eine hohe Übertragungsbandbreite zur Verfügung gestellt werden kann.

Vorteilhafte Weiterbildungen der Erfindung sind in den Unteransprüchen angegeben.

Ein Vorteil von in den Unteransprüchen definierten Ausgestaltungen der Erfindung besteht unter anderem darin, daß durch eine Überprüfung einer Berechtigung zum Anmelden eines externen Kommunikationsendgerätes an der Kommunikationsanlage anhand von teilnehmerbezogenen Daten - die beispielsweise eine teilnehmerindividuelle Identifikationsnummer und alternativ oder additiv ein teilnehmerindividuelles Paßwort umfassen - ein unauthorisierter Zugriff auf unternehmens-interne Daten unterbindbar ist.

Ein weiterer Vorteil von in den Unteransprüchen definierten Ausgestaltungen der Erfindung besteht darin, daß durch die Anbindung des externen Kommunikationsendgerätes an das lokale Rechnernetz mittels der ADSL-Anschlußtechnik (Asymmetric Digital Subscriber Line) auch bei längeren Anmeldezeitspannen nur geringe Gebühren anfallen, da ein Teilnehmer in der Regel eine monatliche Grundgebühr, aber keine zusätzlichen Verbindungsgebühren für seinen Anschluß entrichten muß.

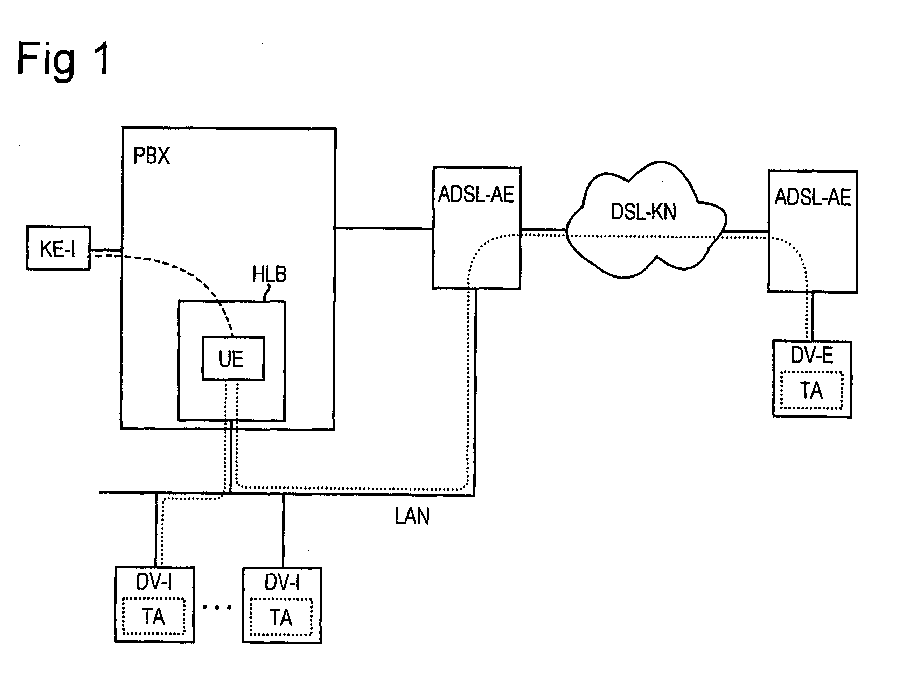

Ein Ausführungsbeispiel der Erfindung wird im folgenden anhand der Zeichnung näher erläutert.

Fig. zeigt eine schematische Darstellung einer Kommunikationsanlage PBX mit einer in dieser angeordneten, als Teilnehmer-Anschlußeinheit ausgestalteten Baugruppe - im weiteren mit Teleworking-Baugruppe HLB bezeichnet. Die Kommunikationsanlage PBX weist weitere - nicht dargestellte - Teilnehmer- bzw. Netzanschlußeinheiten zum Anschluß von Kommunikationsendgeräten an die Kommunikationsanlage PBX bzw. zum Anschluß der Kommunikationsanlage PBX an ein Kommunikationsnetz auf.

Die Kommunikationsanlage PBX ist über eine erste Anschlußeinheit ADSL-AE mit einem, auf der sogenannten ADSL-Übertragungstechnik basierenden Kommunikationsnetz DSL-KN verbunden. Eine Datenübermittlung auf Basis der ADSL-Übertragungstechnik ist beispielsweise aus dem Artikel: "ADSL - unsymmetrische Übertragungstechnik auf Ortsanschlußleitungen", ntz Telekommunikation und Informationstechnik, Bd. 48, Heft4, 1995, insbesondere den Seiten 28 - 35 bekannt. Mittels der ADSL-Anschlußtechnik besteht die Möglichkeit an einem Teilnehmernetzanschluß über eine Kupferleitung zusätzlich zum herkömmlichen Sprachkanal einen breitbandigen Datenkanal bereitzustellen. Über diesen breitbandigen Datenkanal ist ausgehend von einem ADSL-orientierten Kommunikationsnetz zum Teilnehmer - in der Literatur häufig als 'Downstream'-Richtung bezeichnet - eine Datenübertragungsrate von 6 - 8 MBit/s realisierbar. Ausgehend vom Teilnehmer zum ADSL-orientierten Kommunikationsnetz - in der Literatur häufig als 'Upstream'-Richtung bezeichnet - ist dagegen lediglich eine Datenübertragungsrate von bis zu 600 kBit/s realisierbar. Alternativ kann eine Übertragung über das Kommunikationsnetz DSL-KN auch auf Basis einer anderen DSL-Übertragungstechnik, wie z.B. SDSL, HDSL, VDSL erfolgen.

An das Kommunikationsnetz DSL-KN ist über eine zweite Anschlußeinheit ADSL-AE eine externe Datenverarbeitungseinrichtung DV-E (z.B. ein sogenannter Personal Computer oder eine sogenannte Workstation) angeschlossen. Die externe Datenverarbeitungseinrichtung DV-E weist eine in Software implementierte (durch die gepunktete Linie angedeutet) Telefonanwendung TA auf. Durch eine derartige Telefonanwendung TA stehen einem Benutzer der externen Datenverarbeitungseinrichtung DV-E alle Funktionsmerkmale - häufig auch als 'Features' bezeichnet - eines herkömmlichen Telefons zur Verfügung. In der Literatur wird eine derartige Anwendung deshalb häufig auch als virtuelles Telefon bezeichnet. Die Verwendung einer derartige Telefonanwendung TA setzt jedoch die Ausgestaltung der Datenverarbeitungseinrichtung DV-E mit einer sogenannten 'Soundkarte' zum Anschluß geeigneter Sprach-Eingabemittel - z.B. eines Mikrofons - und Sprach-Ausgabemittel - z.B. eines Lautsprechers - an die Datenverarbeitungseinrichtung DV-E voraus. Des weiteren ist im vorliegenden Ausführungsbeispiel ein internes Kommunikationsendgerät KE-I an der Kommunikationsanlage PBX angeschlossen.

Über eine LAN-Schnittstelle (Local Area Network) der Teleworking-Baugruppe HLB ist die Kommunikationsanlage PBX zusätzlich mit einem lokalen Rechnernetz LAN verbunden. Im lokalen Rechnernetz LAN sind beispielhaft mehrere interne Datenverarbeitungseinrichtungen DV-I angeordnet, wobei auf den internen Datenverarbeitungseinrichtungen DV-I analog zur externen Datenverarbeitungseinrichtung DV-E jeweils eine Telefonanwendung TA implementiert ist. Des weiteren ist das lokale Rechnernetz LAN über die erste Anschlußeinheit ADSL-AE mit dem Kommunikationsnetz DSL-KN verbunden.

Eine Datenübermittlung zwischen dem internen Kommunikationsendgerät KE-I und der Kommunikationsanlage erfolgt auf Basis eines zeitschlitz-orientierten Datenformats (durch die gestrichelte Linie angedeutet), beispielsweise auf Basis des bekannten PCM-Datenformats (Puls Code Modulation). Eine Übermittlung von sprachorientierten Daten über das lokale Rechnernetz LAN erfolgt beispielsweise auf Basis des, auf dem bekannten TCP/IP-Protokoll (Transmission Control Protokoll / Internet Protokoll) basierenden Protokolls H.323 (durch die gepunktete Linie angedeutet). Für eine Datenübermittlung zwischen dem internen Kommunikationsendgerät KE-I und einer internen Datenverarbeitungseinrichtung DV-I bzw. zwischen dem internen Kommunikationsendgerät KE-I und der externen Datenverarbeitungseinrichtung DV-E weist die Teleworking-Baugruppe HLB eine Umwandlungseinheit UE auf, durch die eine bidirektionalen Datenkonvertierung zwischen dem zeitschlitz-orientierten PCM-Datenformat und dem Übertragungsprotokoll H.323 erfolgt.

Startet ein Teilnehmer an der externen Datenverarbeitungseinrichtung DV-E die Telefonanwendung TA, wird in einem nächsten Schritt eine Verbindung zwischen der externen Datenverarbeitungseinrichtung DV-E und der Teleworking-Baugruppe HLB über das Kommunikationsnetz DSL-KN aufgebaut. Die Anmeldung an der Teleworking-Baugruppe HLB der Kommunikationsanlage PBX erfolgt dabei auf einfache Weise z.B. durch Anwählen eines bestimmten internen Teilnehmeranschlußports der Kommunikationsanlage PBX.

Im Rahmen der Anmeldeprozedur der externen Datenverarbeitungseinrichtung DV-E erfolgt aus sicherheitstechnischen Gründen durch die Teleworking-Baugruppe HLB sowohl eine Identifizierungsüberprüfung der externen Datenverarbeitungseinrichtung DV-E als auch zusätzlich eine Authentifizierungsüberprüfung des, der externen Datenverarbeitungseinrichtung DV-E zugeordneten Teilnehmers. Hierzu wird für die Identifizierung die, der externen Datenverarbeitungseinrichtung DV-E im Kommunikationsnetz DSL-KN zugeordnete Rufnummer und zusätzlich - falls vorhanden - eine der externen Datenverarbeitungseinrichtung DV-E zugeordnete IP-Adresse (Internet Protokoll) über die Verbindung übermittelt. Für die Authentifizierung des, der externen Datenverarbeitungseinrichtung DV-E zugeordneten Teilnehmers wird eine teilnehmerindividuelle Identifikationsnummer PIN (Private Identification Nummer) - alternativ auch ein teilnehmerindividuelles Paßwort - an die Teleworking-Baugruppe HLB der Kommunikationsanlage PBX übermittelt.

Anhand einer auf der Teleworking-Baugruppe HLB gespeicherten - nicht dargestellten - Datenbasis, welche die für das Teleworking berechtigten Rufnummern bzw. IP-Adressen und teilnehmerindividuellen Identifikationsnummern PIN enthält, findet eine Überprüfung der Anmeldung der externen Datenverarbeitungseinrichtung DV-E statt. Stimmt die, der übermittelten Rufnummer bzw. IP-Adresse der externen Datenverarbeitungseinrichtung DV-E in der Datenbasis als zugeordnet gespeicherte teilnehmerindividuelle Identifikationsnummer PIN mit der übermittelten teilnehmerindividuellen Identifikationsnummer PIN nicht überein, ist die Anmeldung nicht bestätigt und die Verbindung zwischen der externen Datenverarbeitungseinrichtung DV-E und der Teleworking-Baugruppe HLB wird abgebaut. Zusätzlich ist in der Datenbasis DB für jede zur Anmeldung an der Teleworking- Baugruppe HLB berechtigte externe Datenverarbeitungseinrichtung DV-E eine sogenannte Rückrufadresse gespeichert, mittels der ein Verbindungsaufbau ausgehend von der Kommunikationsanlage PBX zur jeweiligen externen Datenverarbeitungseinrichtung DV-E möglich ist.

Stimmt die, der übermittelten Rufnummer bzw. IP-Adresse der externen Datenverarbeitungseinrichtung DV-E in der Datenbasis als zugeordnet gespeicherte teilnehmerindividuelle Identifikationsnummer PIN dagegen mit der übermittelten teilnehmerindividuellen Identifikationsnummer PIN überein, so ist die Anmeldung bestätigt und die externe Datenverarbeitungseinrichtung DV-E wird in der Datenbasis als angemeldet vermerkt. Gleichzeitig wird der externen Datenverarbeitungseinrichtung PC-E von der Teleworking-Baugruppe HLB eine kommunikationsanlagen-interne Rufnummer zugewiesen. Hierbei ist jeder externen Datenverarbeitungseinrichtung DV-E eine immanente kommunikationsanlagen-interne Rufnummer zugeordnet, die einer externen Datenverarbeitungseinrichtung DV-E infolge einer Anmeldung von der Teleworking-Baugruppe HLB zugewiesen wird. Damit wird sichergestellt, daß ein externer Teilnehmer immer unter derselben Teilnehmerrufnummer erreichbar ist. Ist der externen Datenverarbeitungseinrichtung DV-E keine immanente IP-Adresse zugeordnet, so wird der externen Datenverarbeitungseinrichtung DV-E zusätzlich zur kommunikationsanlagen-internen Rufnummer eine temporäre IP-Adresse zugeordnet. Mittels der immanenten bzw. temporären IP-Adresse ist eine Datenübermittlung ausgehend von einer internen Datenverarbeitungseinrichtung DV-I zur externen Datenverarbeitungseinrichtung DV-E möglich.

Soll im folgenden eine Verbindung mit der externen Datenverarbeitungseinrichtung DV-E aufgebaut werden, d.h. wird durch das interne Kommunikationsendgerät KE-I die der externen Datenverarbeitungseinrichtung DV-E zugeordnete kommunikationsanlagen-internen Rufnummer angewählt oder erfolgt eine Datenübermittlung ausgehend von einer internen Datenverarbeitungseinrichtung DV-I mit der, der externen Datenverarbeitungseinrichtung DV-E zugeordneten immanenten bzw. temporären IP-Adresse als Zieladresse, so werden die im Rahmen der Verbindung zu übermittelten Daten ausgehend von der Teleworking-Baugruppe HLB über das lokale Rechnernetz LAN und das Kommunikationsnetz DSL-KN an die externe Datenverarbeitungseinrichtung übermittelt. Zusätzlich werden von der Steuereinheit STE der Kommunikationsanlage PBX an die kommunikationsanlagen-interne Rufnummer zu übermittelnde endgeräteorientierte Signalisierungsinformationen auf Basis eines proprietären Protokolls über das lokale Rechnernetz LAN und das Kommunikationsnetz DSL-KN an die externe Datenverarbeitungseinrichtung DV-E übermittelt.

Die endgeräteorientierten Signalisierungsinformationen basieren beispielsweise auf einem kommunikationsanlagen-internen Signalisierungsprotokoll, wie es üblicherweise beim Signalisierungsaustausch zwischen internen Kommunikationsendgeräten KE-I und der Steuereinheit der Kommunikationsanlage PBX zur Verfügung steht. Durch die Übermittlung von, auf dem internen Signalisierungsprotokoll basierenden endgeräteorientierten Signalisierungsinformationen an die externe Datenverarbeitungseinrichtung DV-E, werden der auf der externen Datenverarbeitungseinrichtung DV-E ablaufenden Telefonanwendung TA alle von der Kommunikationsanlage PBX realisierten Leistungsmerkmale in gleicher Weise, wie einem internen Kommunikationsendgerät KE-I zur Verfügung gestellt. Eine Übermittlung von endgeräteorientierten Signalisierungsinformationen ausgehend von der externen Datenverarbeitungseinrichtung DV-E - eine Anmeldung an der Teleworking-Baugruppe HLB der Kommunikationsanlage PBX vorausgesetzt - zur Steuereinheit der Kommunikationsanlage PBX erfolgt in gleicher Weise in umgekehrter Richtung.

Durch die Übermittlung der, zwischen der externen Datenverarbeitungseinrichtung DV-E und der Kommunikationsanlage PBX zu übermittelnden Daten - sowohl der sprachorientierten Daten, als auch der Nutzdaten - über ein, das lokale Rechnernetz LAN und die externe Datenverarbeitungseinrichtung DV-E verbindendes ADSL-orientiertes Kommunikationsnetz ist zwischen der Kommunikationsanlage PBX und der externen Datenverarbeitungseinrichtung DV-E auf einfache Weise eine Übertragungsbitrate von bis zu 600 kBit/s realisierbar.

Zusätzlich fallen durch die Anbindung der externen Datenverarbeitungseinrichtung DV-E an das ADSL-orientierte Kommunikationsnetz auch bei längeren Anmeldezeitspannen der externen Datenverarbeitungseinrichtung DV-E an der Kommunikationsanlage PBX nur geringe Gebühren an, da der externe Teilnehmer in der Regel eine monatliche Grundgebühr, aber keine zusätzlichen Verbindungsgebühren für seinen Anschluß entrichten muß.

Somit kann der externe Teilnehmer kostengünstig permanent - in der Literatur häufig mit 'always-on' bezeichnet - auf die im lokalen Rechnernetz LAN gespeicherten internen Daten und auf die Leistungsmerkmale der Kommunikationsanlage PBX zugreifen.

## Patentansprüche

1. Anordnung für eine Datenübermittlung zwischen einer Kommunikationsanlage (PBX) und einem externen Kommunikationsendgerät (DV-E) über ein paket-orientiertes Kommunikationsnetz (DSL-KN), wobei die Kommunikationsanlage (PBX) über ein lokales Rechnernetz (LAN) mit einer, einen Anschluß an das paket-orientierte Kommunikationsnetz (DSL-KN) realisierenden Netz-Anschlußeinheit (ADSL-AE) verbunden ist,
mit einer den Anschluß an das lokale Rechnernetz (LAN) realisierenden Steuerbaugruppe (HLB) in der Kommunikationsanlage (PBX) zur Steuerung einer, nach einem Anmelden des externen Kommunikationsendgerätes (DV-E) bei der Kommunikationsanlage (PBX) zu erfolgenden Datenübermittlung
- zwischen einem internen, an die Kommunikationsanlage (PBX) angeschlossenen Kommunikationsendgerät (KE-I) und dem externen Kommunikationsendgerät (DV-E), und
- zwischen einer über das lokale Rechnernetz (LAN) an die Kommunikationsanlage (PBX) angeschlossenen Datenverarbeitungseinrichtung.(DV-I) und dem externen Kommunikationsendgerät (DV-E)
über das lokale Rechnernetz (LAN) und das paket-orientierte Kommunikationsnetz (DSL-KN).

2. Anordnung nach Anspruch 1,
**dadurch gekennzeichnet,**
**daß** die Steuerbaugruppe (HLB) eine Umwandlungseinheit (UE) zur Umwandlung eines, für eine Übertragung von sprachorientierten Daten vorgesehenes, kommunikationsanlagen-internes Datenformats auf ein, für eine Übertragung von sprachorientierten Daten vorgesehenes Datenformat des lokalen Netzes (LAN) aufweist.

3. Anordnung nach Anspruch 1 oder 2,
**dadurch gekennzeichnet,**
**daß** die Steuerbaugruppe (HLB) eine Datenbasis zur Speicherung von teilnehmerbezogenen Daten, für eine Überprüfung von im Rahmen des Anmeldens an die Steuerbaugruppe (HLB) übermittelten teilnehmerbezogenen Daten auf eine Berechtigung zum Anmelden, aufweist.

4. Anordnung nach Anspruch 3,
**dadurch gekennzeichnet,**
**daß** die teilnehmerbezogenen Daten eine teilnehmerindividuelle Identifikationsnummer, PIN, und/oder ein teilnehmerindividuelles Paßwort umfassen.

5. Anordnung nach einem der vorhergehenden Ansprüche,
**dadurch gekennzeichnet,**
**daß** die Steuerbaugruppe (HLB) eine weitere Datenbasis zur Speicherung von Endgeräte-Adressen aufweist, die im Rahmen einer Anmeldung einem Kommunikationsendgerät (DV-E) zugeordnet werden.

6. Anordnung nach einem der vorhergehenden Ansprüche,
**dadurch gekennzeichnet,**
**daß** für eine Datenübertragung über das lokale Rechnernetz (LAN) das TCP/IP-Protokoll, Transmission Control Protocol/Internet Protocol, eingerichtet ist.

7. Anordnung nach Anspruch 6,
**dadurch gekennzeichnet,**
**daß** für eine Übertragung von sprachorientierten Daten über das lokale Rechnernetz (LAN) das auf dem TCP/IP-Protokoll basierende H. 323-Protokoll eingerichtet ist.

8. Anordnung nach einem der vorhergehenden Ansprüche,
**dadurch gekennzeichnet,**
**daß** für eine Datenübertragung über das paket-orientierte Kommunikationsnetz (DSL-KN) das ADSL-Datenübertragungsverfahren, Asymmetric Digital Subscriber Line, eingerichtet ist.

9. Anordnung nach einem der vorhergehenden Ansprüche,
**dadurch gekennzeichnet,**
**daß** das Kommunikationsendgerät (DV-E) eine Datenverarbeitungseinrichtung mit einer auf der Datenverarbeitungseinrichtung (DV-E) ablaufenden, in Software implementierten Telefonanwendung (TA) ist.

## Claims

1. Arrangement for data transmission between a communication system (PBX) and an external communication terminal (DV-E) via a packet-oriented communication network (DSL-KN), the communication system (PBX) being connected via a local computer network (LAN) to a network line unit (ADSL-AE) providing access to the packet-oriented communication network (DSL-KN), having a control module (HLB), providing the access to the local computer network (LAN), in the communication system (PBX) for controlling data transmission, which is to take place after the external communication terminal (DV-E) has logged on to the communication system (PBX),
- between an internal communication terminal (KE-I), which is connected to the communication system (PBX), and the external communication terminal (DV-E), and
- between a data processing device (DV-I), which is connected to the communication system (PBX) via the local computer network (LAN), and the external communication terminal (DV-E) via the local computer network (LAN) and the packet-oriented communication network (DSL-KN).

2. Arrangement according to Claim 1, **characterized in that** the control module (HLB) has a conversion unit (UE) for converting a data format which is provided for transmitting voice-oriented data and is internal to the communication system to a data format, provided for transmitting voice-oriented data, for the local area network (LAN).

3. Arrangement according to Claim 1 or 2, **characterized in that** the control module (HLB) has a database for storing subscriber-related data, for checking subscriber-related data, transmitted to the control module (HLB) as part of logging on, for logon authorization.

4. Arrangement according to Claim 3, **characterized in that** the subscriber-related data comprises a subscriber-specific identification number, PIN, and/or a subscriber-specific password.

5. Arrangement according to one of the preceding claims, **characterized in that** the control module (HLB) has a further database for storing terminal addresses which are assigned to a communication terminal (DV-E) as part of logging on.

6. Arrangement according to one of the preceding claims, **characterized in that** the TCP/IP protocol, Transmission Control Protocol/Internet Protocol, is set up for data transmission via the local computer network (LAN).

7. Arrangement according to Claim 6, **characterized in that** the H.323 protocol based on the TCP/IP protocol is set up for transmission of voice-oriented data via the local computer network (LAN).

8. Arrangement according to one of the preceding claims, **characterized in that** the ADSL data transmission method, Asymmetric Digital Subscriber Line, is set up for data transmission via the packet-oriented communication network (DSL-KN).

9. Arrangement according to one of the preceding claims, **characterized in that** the communication terminal (DV-E) is a data processing device having a telephone application (TA) which runs on the data processing device (DV-E) and is implemented in software.

## Revendications

1. Dispositif pour une transmission de données entre une installation de communication (PBX) et un dispositif de traitement de données externe (DV-E) par l'intermédiaire d'un réseau de communication orienté paquets (DSL-KN), l'installation de communication (PBX) étant reliée par l'intermédiaire d'un réseau informatique local (LAN) à une unité de raccordement au réseau (ADSL-AE) réalisant un raccordement au réseau de communication orienté paquets (DSL-KN),
avec un module de commande (HLB), réalisant le raccordement au réseau informatique local (LAN), dans l'installation de communication (PBX), pour la commande d'une transmission de données à effectuer après une inscription du dispositif de traitement de données externe (DV-E) auprès de l'installation de communication (PBX)
- entre un terminal de communication interne (KE-I) raccordé à l'installation de communication (PBX) et le terminal de communication externe (DV-E), et
- entre un dispositif de traitement de données (DV-I) raccordé par l'intermédiaire du réseau informatique local (LAN) à l'installation de communication (PBX) et le terminal de communication externe (DV-E),
par l'intermédiaire du réseau informatique local (LAN) et du réseau de communication orienté paquets (DSL-KN).

2. Dispositif selon la revendication 1,
**caractérisé par le fait que** le module de commande (HLB) comporte une unité de conversion (UE) pour la conversion d'un format de données interne à l'installation de communication et prévu pour une transmission de données vocales en un format de données prévu pour une transmission de données vocales dans le réseau local (LAN).

3. Dispositif selon la revendication 1 ou 2,
**caractérisé par le fait que** le module de commande (HLB) comporte une base de données pour la mémorisation de données se rapportant à l'abonné en vue d'une vérification de données se rapportant à l'abonné et transmises dans le cadre de l'inscription au module de commande (HLB) afin d'autoriser l'inscription.

4. Dispositif selon la revendication 3,
**caractérisé par le fait que** les données se rapportant à l'abonné comprennent un numéro d'identification propre à l'abonné, PIN, et/ou un mot de passe propre à l'abonné.

5. Dispositif selon l'une des revendications précédentes,
**caractérisé par le fait que** le module de commande (HLB) comporte une autre base de données pour la mémorisation d'adresses de terminaux qui sont associées à un terminal de communication (DV-E) dans le cadre d'une inscription.

6. Dispositif selon l'une des revendications précédentes,
**caractérisé par le fait que**, pour une transmission de données par l'intermédiaire du réseau informatique local (LAN), on utilise le protocole TCP/IP, Transmission Control Protocol / Internet Protocol.

7. Dispositif selon la revendication 6,
**caractérisé par le fait que**, pour une transmission de données vocales par l'intermédiaire du réseau informatique local (LAN), on utilise le protocole H.323 basé sur le protocole TCP/IP.

8. Dispositif selon l'une des revendications précédentes,
**caractérisé par le fait que**, pour une transmission de données par l'intermédiaire du réseau de communication orienté paquets (DSL-KN), on utilise le procédé de transmission de données ADSL, Asymetric Digital Subscriber Line.

9. Dispositif selon l'une des revendications précédentes,
**caractérisé par le fait que** le terminal de communication (DV-E) est un dispositif de traitement de données avec une application téléphonique (TA) mise en oeuvre sous forme logicielle et s'exécutant sur le dispositif de traitement de données (DV-E).
